(19) Europäisches Patentamt
European Patent Office
Office européen des brevets

(11) **EP 3 838 661 B1**

(12) **EUROPÄISCHE PATENTSCHRIFT**

(45) Veröffentlichungstag und Bekanntmachung des Hinweises auf die Patenterteilung:
**05.07.2023   Patentblatt 2023/27**

(21) Anmeldenummer: **20000447.1**

(22) Anmeldetag: **09.12.2020**

(51) Internationale Patentklassifikation (IPC):
**B60N 2/22** *(2006.01)*      **B60N 2/50** *(2006.01)*

(52) Gemeinsame Patentklassifikation (CPC):
**B60N 2/2209; B60N 2/50**

(54) **FAHRZEUGSITZ**

VEHICLE SEAT

SIÈGE DU VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2019   DE 102019134704**

(43) Veröffentlichungstag der Anmeldung:
**23.06.2021   Patentblatt 2021/25**

(73) Patentinhaber: **GRAMMER AG**
**92289 Ursensollen (DE)**

(72) Erfinder: **Haller, Erwin**
**92262 Birgland (DE)**

(74) Vertreter: **Hannke Bittner & Partner mbB**
**Regensburg**
**Prüfeninger Straße 1**
**93049 Regensburg (DE)**

(56) Entgegenhaltungen:
**EP-A1- 3 428 005      DE-T5-112014 000 389**
**FR-A1- 2 946 577**

**Beschreibung**

Die Erfindung betrifft einen Fahrzeugsitz umfassend ein Rückenlehnenelement mit einer ersten Anlagefläche, welche innerhalb einer ersten fiktiven Ebene angeordnet ist und ein Sitzelement mit einer zweiten Anlagefläche, welche innerhalb einer zweiten fiktiven Ebene angeordnet ist, die durch eine Längsachse (X) und eine Breitenachse (Y) des Fahrzeugsitzes aufgespannt wird, wobei die erste fiktive Ebene und die zweite fiktive Ebene sich in einer Schnittachse (SR) schneiden, wobei das Rückenlehnenelement relativ zu dem Sitzelement um eine Drehachse (RD) schwenkbar ist, wobei sich ein Neigungswinkel $\alpha$ des Rückenlehnenelementes zwischen der ersten fiktiven Ebene und einer Mittelachse, welche senkrecht zu der zweiten fiktiven Ebene verläuft, erstreckt.

Derartige Fahrzeugsitze sind insbesondere in Nutzfahrzeugen wie beispielsweise Traktoren, Baumaschinen, Stapler, Lastkraftwagen usw. vorgesehen. Bei Traktoren oder Staplern ist es oft bevorzugt, dass in einer aufrechten Position sich die Rückenlehne nicht bis zum Schulterbereich erstreckt. Hierdurch wird dem Fahrer eine größere Bewegungsfreiheit hinsichtlich einer Drehung des Oberkörpers ermöglicht, welche beispielsweise bei Rückwärtsfahrten von Vorteil ist. Dokument EP3428005 offenbart einen Fahrzeugsitz mit einer schwenkbaren Rückenlehne.

Oftmals ist es wünschenswert, dass das Rückenlehnenelement relativ zu dem Sitzelement nach hinten neigbar, beziehungsweise schwenkbar ist. Eine solche Neigung nach hinten kann für einen Fahrer vorteilhaft sein, um sich in eine Ruheposition zu begeben. Bei Schubmaststaplern oder Teleladern kann es auch erforderlich sein, dass der Fahrer eine Arbeitsposition mit Blickrichtung nach oben einnehmen muss und somit das Rückenlehnenelement nach hinten neigt. Bei einer Neigung nach hinten kann eine kurze Rückenlehne jedoch als nachteilig empfunden werden, da der Schultergelenkpunkt des Fahrers nicht ausreichend durch das Rückenlehnenelement abgestützt wird.

Aufgabe der vorliegenden Erfindung ist es einen Fahrzeugsitz bereitzustellen, welcher die angeführten Nachteile überwindet.

Diese Aufgabe wird gelöst von einem Fahrzeugsitz umfassend ein Rückenlehnenelement mit einer ersten Anlagefläche, welche innerhalb einer ersten fiktiven Ebene angeordnet ist und ein Sitzelement mit einer zweiten Anlagefläche, welche innerhalb einer zweiten fiktiven Ebene angeordnet ist, die durch eine Längsachse X und eine Breitenachse Y des Fahrzeugsitzes aufgespannt wird, wobei die erste fiktive Ebene und die zweite fiktive Ebene sich in einer Schnittachse SR schneiden, wobei das Rückenlehnenelement relativ zu dem Sitzelement um eine Drehachse RD schwenkbar ist, wobei sich ein Neigungswinkel $\alpha$ des Rückenlehnenelementes zwischen der ersten fiktiven Ebene und einer Mittelachse, welche senkrecht zu der zweiten fiktiven Ebene verläuft, erstreckt, wobei in einer ersten Position des Rückenlehnenelementes ein Abstand A entlang der Längsachse X zwischen der Drehachse RD und der Schnittachse SR zumindest 60mm ist, wobei in der ersten Position des Rückenlehnenelementes der Neigungswinkel $\alpha$ im Wesentlichen 10° beträgt.

Die erste und die zweite Anlagefläche sind dafür geeignet und vorgesehen mit einem Insassen in Kontakt zu treten. Die Drehachse RD ist im Vergleich zu den üblichen Fahrzeugsitzen entlang der Längsachse X nach hinten verlagert. Als Bezugspunkt dient hierbei die Schnittachse SR, welche dahingehend definiert wird, dass sich in dieser Achse die erste und die zweite fiktive Ebene schneiden. Die erste und die zweite Anlagefläche werden als weitestgehend eben angesehen.

Denkbar wäre natürlich, dass das Rückenlehnenelement eine Wölbung aufweist und/oder schalenartig ausgebildet ist. Bei einer solchen Ausgestaltung ist ein seitlicher Bereich des Rückenlehnenelementes derart ausgestaltet, dass dieses entlang der Längsrichtung (X) nach vorne ragt. Hierdurch liegt das Rückenlehnenelement sich ergonomisch an dem Insassen an. Als erste Anlagefläche kann bei einer derartigen Ausgestaltung ein hinterer mittiger Bereich des Rückenlehnenelementes, welcher sich im Wesentlichen eben, beziehungsweise parallel zu der Breitenachse Y erstreckt, angenommen werden.

Die Verlagerung der Drehachse RD entlang der Längsachse (X) nach hinten führt dazu, dass ein oberer Rand des Rückenlehnenelementes bezogen auf die Schnittachse SR beim Nach-hinten-Schwenken des Rückenlehnenelementes stark nach oben verlagert wird. Demnach wird auch die erste Anlagefläche nach oben verlagert. Unter dem Ausdruck "nach oben verlagert" ist hierbei zu verstehen, dass die erste Anlagefläche entlang des Rückens des Insassen nach oben verlagert wird. Es wird somit ein Abstand des oberen Randes des Rückenlehnenelementes zu dem Schultergelenkspunkt des Insassen verkleinert. Aus dem Stand der Technik sind Sitze bekannt welche einen Abstand A von ca. 20mm aufweisen. Durch den erfindungsgemäßen Fahrzeugsitz mit einem Abstand A von zumindest 60mm wird eine Verlagerung der ersten Anlagefläche nach oben erzielt, welche ausreichend ist, um eine entsprechende Abstützung des oberen Rückens zu gewährleisten.

Dabei wird vorzugsweise von einer sogenannten "50 perc Person" ausgegangen. Dieser statistische Wert von 50. Perzentil repräsentiert die Körpermaße "mittelgroß". Dabei liegen statistisch je 50 % aller Werte über und unter diesem Wert. Ein männlicher "50 perc Fahrer" hat demnach beispielsweise eine Körperhöhe von 175,0 cm und eine Schulterhöhe von 145,0 cm (Siehe hierzu W. Lange "Kleine Ergonomische Datensammlung").

Der Abstand A ist in einer ersten Position bestimmt, in welcher der Neigungswinkel $\alpha$ im Wesentlichen 10° beträgt. Unter dem Ausdruck im Wesentlichen ist dabei zu verstehen, dass der Wert um übliche Toleranzen abweichen kann. Vorteilhafterweise kann der Neigungswinkel um einen Wert von ±2° weiter bevorzugt um einen Wert von ±1° abweichen. Ein Neigungswinkel α von im Wesentlichen 10° ist ein Neigungswinkel, welcher eine komfortable aufrechte Sitzposition ermöglicht.

Vorzugsweise ist der Abstand A zumindest 65mm. Weiter bevorzugt ist der Abstand A zumindest 70 mm. Weiter bevorzugt ist der Abstand A zumindest 80 mm, weiter bevorzugt ist der Abstand A zumindest 90 mm, weiter bevorzugt ist der Abstand A zumindest 120 mm. Weiter bevorzugt ist der Abstand A zumindest 150mm. Weiter bevorzugt ist der Abstand A zumindest 180 mm. Vorzugsweise ist der maximale Abstand A ca. 200 mm.

Nach einer weiteren bevorzugten Ausführungsform umfasst der Fahrzeugsitz einen Sitzunterbau. Der Sitzunterbau kann beispielsweise eine Scherengestellanordnung umfassen, welche an einem Karosserieboden angeordnet wird. Denkbar wäre auch, dass der Sitzunterbau eine Rahmenanordnung ist, welche an den Karosserien anordenbar ist. Vorteilhafterweise umfasst der Sitzunterbau eine Feder- und/oder Dämpfungseinrichtung für vertikale und/oder horizontale Schwingungen. Unter einer Federung ist dabei eine Einrichtung zu verstehen, welche eine Rückstellung nach einer Auslenkung durch vertikale oder horizontale Schwingungen bewirkt. Eine Dämpfung bewirkt eine Dissipation der durch die vertikalen und/oder horizontalen Schwingungen eingebrachten Bewegungsenergie, wobei das Sitzelement an einem Sitzunterbau verlagerbar angeordnet ist. Denkbar ist es auch dass der Sitzunterbau mittels eines Schienensystems verlagerbar an dem Karosserieboden angeordnet ist.

Nach einer weiteren bevorzugten Ausführungsform ist das Sitzelement an dem Sitzunterbau verlagerbar angeordnet. Vorzugsweise ist das Sitzelement entlang der Längsachse X verlagerbar. Vorteilhafterweise ist bei einer Verschwenkung des Rückenlehnenelementes um den Neigungswinkel α das Sitzelement entlang der Längsrichtung X verlagert. Bevorzugt wird bei einer Neigung des Rückenlehnelementes nach hinten das Sitzelement entlang der Längsachse X nach vorne verlagert. Bevorzugt umfasst das Sitzelement ein plattenartiges Element, welches an dem Sitzunterbau verlagerbar angeordnet ist. Bevorzugt ist ein Polsterelement auf dem plattenartigen Element angeordnet. Das Polsterelement ist vorteilhafterweise oberseitig an dem plattenartigen Element angeordnet. Es kann vorteilhafterweise weiterhin ein Bezug über dem Polsterelement oder dem plattenartigen Element angeordnet sein. Das Polsterelement kann vorzugsweise schalenartig ausgebildet sein, um eine ergonomische komfortable Sitzfläche bereitzustellen.

Nach einer weiteren bevorzugten Ausführungsform ist die Drehachse (RD) entlang einer Höhenachse Z von der Schnittachse SR beabstandet. Vorzugsweise umfasst das Rückenlehnenelement einen unteren Abschnitt, welcher sich unter der Drehachse (RD) erstreckt. Bei einer Neigung des oberen Abschnitts des Rückenlehnenelements nach hinten, schwenkt dieser untere Abschnitt entsprechend entlang der Längsrichtung nach vorne. Hierdurch kann auf einfachste Weise eine Lordosenunterstützung erfolgen, welche einen zusätzlichen Komfort bereitstellt.

Nach einer weiteren bevorzugten Ausführungsform weist der Fahrzeugsitz eine Haltevorrichtung auf, an welcher das Rückenlehnenelement schwenkbar angeordnet ist. Vorteilhafterweise ist die Haltevorrichtung mit dem Sitzunterbau verbunden. Die Haltevorrichtung kann dabei zwei Schenkel umfassen, welche sich entlang der Höhenachse Z nach oben erstrecken. An diesen Schenkeln ist jeweils eine Lagerung vorgesehen, an welcher die Rückenlehne schwenkbar gelagert ist. Dabei kann vorzugsweise eine physische, entlang der Breite des Rückenlehnenelementes, durchgehende Drehachse vorgesehen sein. Alternativ können jeweils zwei Drehachsen seitlich an dem Rückenlehnenelement vorgesehen sein, welche in den Lagerungen der Schenkel gelagert sind. Die Drehachse RD wäre demnach eine fiktive Drehachse. Die Haltevorrichtung kann vorzugsweise weiterhin ein Verbindungselement umfassen, welches sich entlang der Breitenachse Y erstreckt und die beiden Schenkel verbindet. Dieses Verbindungselement kann integral mit Sitzunterbau sein oder an dem Sitzunterbau fest angeordnet sein.

Nach einer weiteren bevorzugten Ausführungsform umfasst die Haltevorrichtung eine Arretierungseinrichtung, welche eine Neigung des Rückenlehnenelementes arretiert. Demnach kann das Rückenlehnenelement derart festgelegt werden, dass dieses einen bestimmten Neigungswinkel α zu der Mittelachse aufweist. Vorzugsweise ist eine Bedieneinrichtung vorgesehen , mittels welcher die Arretierungseinrichtung bedienbar ist und mittels welcher eine Neigung des Rückenlehnenelementes einstellbar ist. Eine Arretierungseinrichtung kann verschiedenartige Mechanismen umfassen. Beispielsweise kann die Arretierungseinrichtung eine lösbare Verzahnung eines Riegelelements in einem Zahnelement umfassen. Vorteilhafterweise weist das Zahnelement einen kreissegmentförmigen Abschnitt auf und das Riegelelement ist mit einer Federkraft beaufschlagt. Über das Bedienelement kann vorteilhafterweise die Verzahnung gelöst werden. Ein solches Bedienelement könnte ein Hebelelement, ein Stellantrieb oder ein Bowdenzug sein. Vorteilhafterweise könnte die Arretierungseinrichtung an zumindest einer Lagerung einer Drehachse vorgesehen oder in dieser integriert sein.

Nach einer weiteren bevorzugten Ausführungsform umfasst der Fahrzeugsitz einen Rückstellmechanismus, mittels welchem eine Schwenkung des Rückenlehnenelementes um die Drehachse (RD) zur Ausgangsposition hin rückstellbar ist. Diese Ausgangsposition könnte vorzugsweise die erste Position sein oder eine Position sein, in welcher das Rückenlehnenelement im Wesentlichen senkrecht zum Sitzelement ausgerichtet ist. Der Rückstellmechanismus kann beispielsweise ein elastisches Element oder eine Torsionsfeder umfassen. Vorteilhafterweise könnte der Rückstellmechanismus an der Schwenklagerung des Lagerwellenelementes vorgesehen oder in dieser integriert sein.

Nach einer weiteren bevorzugten Ausführungsform weist das Rückenlehnenelement einen Rahmen oder ein Schalenelement auf. Vorzugsweise erstreckt sich die Drehachse (RD) entlang der Längsrichtung (X) hinter dem Rahmen oder dem Schalenelement. Demnach erstreckt sich die Drehachse auf der vom Insassen abgewandten Seite des Rückenlehnenelementes. Vorzugsweise umfasst das Rückenlehnenelement ein Polsterelement, welches auf dem Rahmen oder dem Schalenelement angeordnet ist.

Nach einer weiteren bevorzugten Ausführungsform sind das Rückenlehnenelement und das Sitzelement mechanisch gekoppelt. Vorzugsweise ist diese mechanische Kopplung dazu geeignet und dafür vorgesehen, bei einer Schwenkbewegung des Rückenlehnenelementes um die Drehachse (RD), beziehungsweise um den Neigungswinkel α eine Translationsbewegung des Sitzelementes entlang der Längsachse (X) zu verursachen. Demnach würde vorteilhafterweise bei einer Schwenkung des Rückenlehnenelementes nach hinten das Sitzelement entlang der Längsachse nach vorne, beziehungsweise entlang der Längsachse (X) von dem Rückenlehnenelement weg, verlagert. Bei einer Schwenkung des Rückenlehnenelementes nach vorne würde vorzugsweise das Sitzelement entlang der Längsachse nach hinten, beziehungsweise entlang der Längsachse (X) zu dem Rückenlehnenelement hin, verlagert. Vorteilhafterweise ist ein elastischer Brückenabschnitt zumindest abschnittsweise zwischen dem Rückenlehnenelement und dem Sitzelement vorgesehen. Vorzugsweise verbindet dieser Brückenabschnitt das Polsterelement des Rückenlehnenelementes mit dem Polsterelement des Sitzelements.

Nach einer weiteren bevorzugten Ausführungsform umfasst das Rückenlehnenelement eine Längenmodifikationseinrichtung, welche dazu geeignet und dafür vorgesehen ist bei einer Schwenkung des Rückenlehnenelementes um die Drehachse (RD) eine Ausdehnung einer Länge des Rückenlehnenelementes zu bewirken. Vorteilhafterweise wird dabei ein oberer Rand des Rückenlehnenelementes nach oben verlagert. Das Polsterelement kann vorzugsweise in dem oberen Bereich elastisch ausgebildet sein. Die Längenmodifikationseinrichtung kann einen Stellantrieb umfassen, welcher den oberen Rand des Rückenlehnenelementes verlagern kann. Dieser Stellantrieb kann elektrisch hydraulisch oder pneumatisch betrieben sein. Vorzugsweise ist der obere Rand des Rückenlehnenelementes verlagerbar an einen Hauptbereich des Rückenlehnenelementes gekoppelt. Dies kann beispielsweise durch eine Teleskopanordnung oder Ähnliches erfolgen.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:

Fig.1   einen Fahrzeugsitz mit einem ersten Neigungswinkel

Fig.2   einen Fahrzeugsitz mit einem zweiten Neigungswinkel;

Fig.3   eine Prinzipskizze zu der Anordnung von Rückenlehnenelement und Sitzelement;
Fig.4   einen weiteren Fahrzeugsitz mit einem ersten Neigungswinkel;
Fig.5   einen weiteren Fahrzeugsitz mit einem zweiten Neigungswinkel;
Fig.6a-6h   einen Fahrzeugsitz mit verschiedenen Neigungswinkeln.

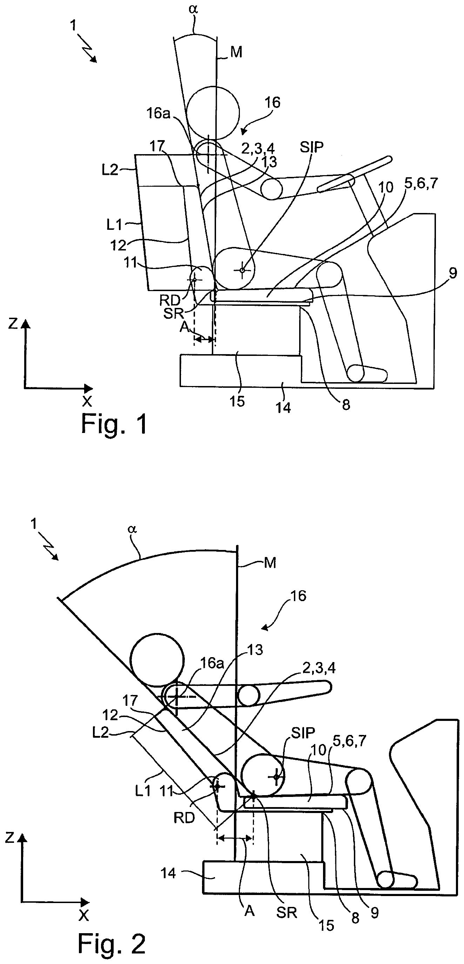

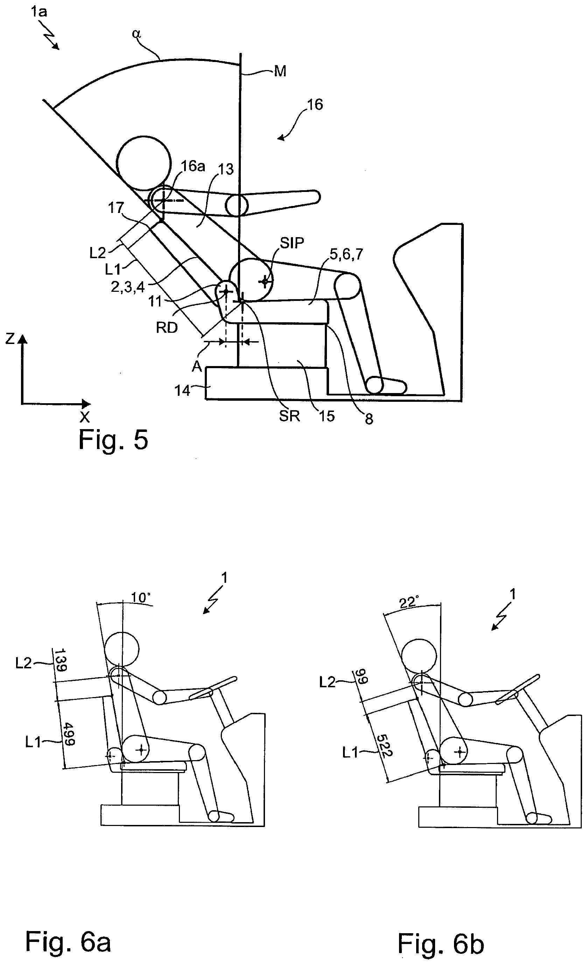

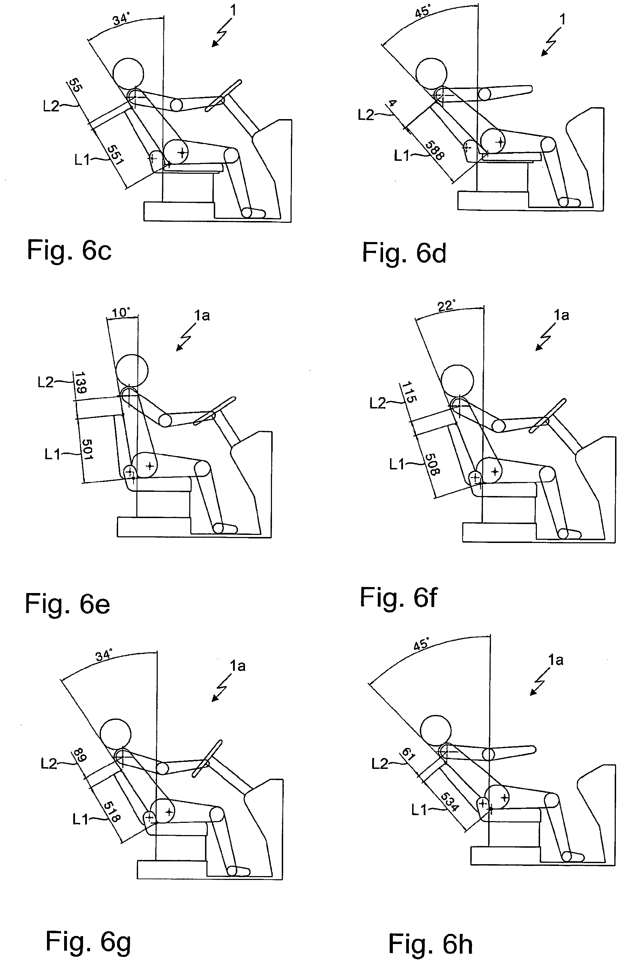

In den Figuren 1 und 6a ist ein Fahrzeugsitz 1 dargestellt, umfassend ein Rückenlehnenelement 2 mit einer ersten Anlagefläche 3, welche innerhalb einer ersten fiktiven Ebene 4 angeordnet ist und ein Sitzelement 5 mit einer zweiten Anlagefläche 6, welche innerhalb einer zweiten fiktiven Ebene 7 angeordnet ist, die durch eine Längsachse X und eine Breitenachse Y des Fahrzeugsitzes 1 aufgespannt wird, wobei die erste fiktive Ebene 4 und die zweite fiktive Ebene 7 sich in einer Schnittachse SR schneiden, wobei das Rückenlehnenelement 2 relativ zu dem Sitzelement 5 um eine Drehachse RD schwenkbar ist, wobei sich ein Neigungswinkel α des Rückenlehnenelementes 2 zwischen der ersten fiktiven Ebene 4 und einer Mittelachse M, welche senkrecht zu der zweiten fiktiven Ebene 7 verläuft, erstreckt, wobei in einer ersten Position des Rückenlehnenelementes ein Abstand A entlang der Längsachse X zwischen der Drehachse RD und der Schnittachse SR zumindest 60 mm ist, wobei in der ersten Position des Rückenlehnenelementes der Neigungswinkel α im Wesentlichen 10° beträgt.

Bevorzugt ist der Abstand A zumindest 65 mm, weiter bevorzugt ist der Abstand A zumindest 70 mm, weiter bevorzugt ist der Abstand A zumindest 80 mm, weiter bevorzugt ist der Abstand A zumindest 90 mm. Vorzugsweise ist der Abstand A maximal 200 mm.

Der Fahrzeugsitz 1 umfasst einen Sitzunterbau 8, welcher an einer Fahrzeugkarosserie 14 angeordnet ist. Dies kann beispielsweise durch ein Schienensystem erfolgen, welches eine Verlagerung des Fahrzeugsitzes entlang der Längsachse X ermöglicht. Der Insasse kann demnach den Abstand zu den Armaturen beziehungsweise der Pedalerie verändern. Der Sitzunterbau 8 kann beispielsweise eine Scherengestellanordnung und/oder eine Rahmenanordnung sein, welche an den Karosserien anordenbar sind. Der Sitzunterbau 8 kann weiterhin eine Feder- und oder Dämpfungseinrichtung 15 für vertikale und/oder horizontale Schwingungen umfassen.

Der Fahrzeugsitz 1 erstreckt sich entlang einer Höhenachse Z, einer Breitenachse Y und einer Längsachse. Den jeweiligen Achsen sind jeweils zwei Richtungen zuzuordnen. So umfasst die Höhenachse Z die Richtungen nach oben und nach unten, wobei die Richtung nach unten zu der Fahrzeugkarosserie hinführt. Die Breitenachse Y umfasst die Richtungen nach rechts und nach links. Die Längsachse X umfasst die Richtungen nach vorne, also in Richtung zu den Armaturen und der Pedalerie und nach hinten.

Das Sitzelement 5 ist an einem Sitzunterbau 8 verlagerbar angeordnet. Dies kann beispielsweise durch ein Schienensystem realisiert werden. Das Sitzelement umfasst dabei beispielsweise ein plattenartiges Element 9, an welchen das Schienensystem angeordnet ist. Das Schienensystem kann dann weiterhin an einem Rahmen des Sitzunterbaus 8 befestigt sein, so dass das plattenartige Element 9 entlang der Längsachse X verlagerbar ist. Alternativ wäre es natürlich auch denkbar, dass anstatt des plattenartigen Elements ein Rahmen oder eine Sitzschale verwendet wird. Bei einer Verschwenkung des Rückenlehnenelementes 2 um den Neigungswinkel $\alpha$ wird das Sitzelement 5 entlang der Längsrichtung X verlagert.

Das Sitzelement 5 umfasst weiterhin ein Polsterelement 10, welches auf dem plattenartigen Element 9, dem Rahmen, der Sitzschale etc. angeordnet ist.

Das Rückenlehnenelement 2 weist einen Rahmen, ein Schalenelement 12 oder Ähnliches auf. Weiterhin umfasst das Rückenlehnenelement 2 ein Polsterelement 13, welches auf dem Rahmen, dem Schalenelement 12 oder Ähnlichem angeordnet ist. Auf den Polsterelementen 10, 13 des Rückenlehnenelement 2, beziehungsweise Sitzelements 5, kann weiterhin ein Bezug angeordnet sein.

Zwischen dem Sitzelement 5 und dem Rückenlehnenelement 2, beziehungsweise dem Polsterelement 10 und dem Polsterelement 13, kann ein elastischer Brückenabschnitt zumindest abschnittsweise vorgesehen sein, welcher diese verbindet.

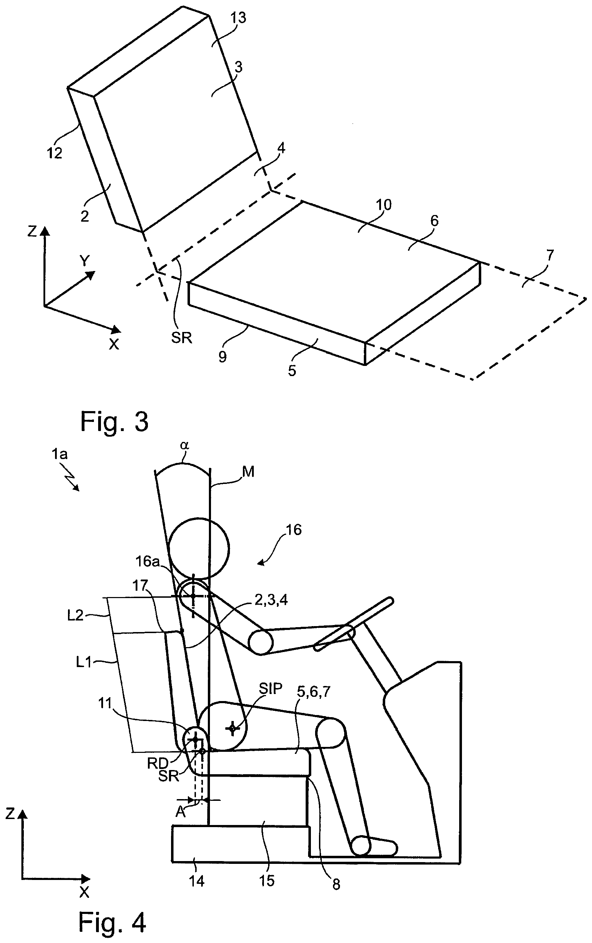

In Figur 3 sind das Rückenlehnenelement 2 mit einer ersten Anlagefläche 3 und das Sitzelement 5 mit einer zweiten Anlagefläche 6 dargestellt. Die erste 3 und die zweite Anlagefläche 6 sind dafür geeignet und vorgesehen, mit einem Insassen in Kontakt zu treten. Die erste Anlagefläche 3 erstreckt sich innerhalb einer ersten fiktiven Ebene 4. Die zweite Anlagefläche 6 erstreckt sich innerhalb einer zweiten fiktiven Ebene 7.

Vorliegend wird von idealerweise ebenen Anlageflächen 3,6 ausgegangen. Denkbar wäre natürlich, dass die Anlageflächen beispielsweise des Rückenelements 2 eine Wölbung aufweisen oder schalenartig ausgebildet sind. Dabei kann ein seitlicher Bereich des Rückenlehnenelementes 2 derart ausgestaltet sein, dass dieser entlang der Längsrichtung X nach vorne ragt, wodurch das Rückenlehnenelement 2 eine ergonomische komfortable Form annimmt. Als erste Anlagefläche kann bei einer derartigen Ausgestaltung ein hinterer mittiger Bereich des Rückenlehnenelementes 2 angenommen werden, welcher sich im Wesentlichen eben, beziehungsweise parallel, zu der Breitenachse Y erstreckt.

Diese fiktiven Ebenen 4, 7 schneiden sich in der Schnittachse SR. Das Sitzelement 5 bleibt jedoch bei einer Schwenkung des Rückenlehnenelementes 2 um die Drehachse $\alpha$ innerhalb der zweiten fiktiven Ebene 7. Die erste Anlagefläche 6 und somit die erste fiktive Ebene 7 werden jedoch um den Neigungswinkel $\alpha$ verschwenkt. Bei einer Schwenkung des Rückenlehnenelementes 2 um die Drehachse $\alpha$ verlagert sich das Sitzelement 5 entlang der Längsachse X. Eine solche Verlagerung kann durch eine mechanische Kopplung des Rückenlehnenelementes 2 mit dem Sitzelement 5 verursacht werden. Eine solche mechanische Kopplung kann eine Schubverbindung, eine getriebeartige Verbindung oder Ähnliches sein. Die Verlagerung des Sitzelements 5 kann auch durch die Rotationsbewegung des Insassen 16 verursacht sein. Die Schnittachse SR verlagert sich bei einer Verschwenkung des Rückenlehnenelementes 2 entlang der Längsachse X. Somit wird auch der Abstand A bei einer Verschwenkung verändert. Bei einer Verschwenkung des Rückenlehnenelementes 2 nach hinten wird die Schnittachse entlang der Längsachse nach vorne verlagert. Der Abstand A wird entsprechend vergrößert.

In Figur 2 ist ein Fahrzeugsitz 1 mit einem Insassen 16 gezeigt. Dem Insassen 16 kann ein fiktiver Drehpunkt SIP zugewiesen werden. Der Oberkörper des Insassen 16 rotiert demnach im Wesentlichen um diesen fiktiven Drehpunkt SIP relativ zu seinen unteren Körperteilen.

In den Figuren 4, 5 und 6e bis 6h sind zu Vergleichszwecken Fahrzeugsitze 1a gezeigt mit einem Abstand A, welcher kleiner ist als der erfindungsgemäße Mindestabstand von 60 mm, bei einem Neigungswinkel von $\alpha$=10°. Zur Identifikation der einzelnen Komponenten sind die gleichen Bezugszeichen wie bei den übrigen Fahrzeugsitzen 1 verwendet worden. In den Figuren 1, 2 und 6a bis 6d sind Fahrzeugsitze gezeigt, welche den Mindestabstand A= 60 mm, bei einem Neigungswinkel von $\alpha$ = 10° aufweisen. Bei diesen Fahrzeugsitzen 1 ist die Drehachse RD im Vergleich zu den in den Figuren 4, 5 und 6e bis 6h dargestellten Fahrzeugsitzen 1a entlang der Längsachse X nach hinten verlagert. Die Schnittachse SR dient dabei als Bezugspunkt. Die Verlagerung der Drehachse RD entlang der Längsachse (X) nach hinten führt dazu, dass ein oberer Rand 17 des Rückenlehnenelementes 2 bezogen auf die Schnittachse SR beim Nach-hinten-Schwenken des Rückenlehnenelementes 2 stark nach oben verlagert. Demnach wird auch die erste Anlagefläche 3 relativ zu dem Insassen 16 nach oben verlagert. Es wird demnach ein Abstand des oberen Randes des Rückenlehnenelementes zu dem Schultergelenkspunkt 16a des Insassen 16 verkleinert. Durch den erfindungsgemäßen

EP 3 838 661 B1

Fahrzeugsitz wird eine Verlagerung der ersten Anlagefläche nach oben erzielt, welche ausreichend ist, um eine entsprechende Abstützung des oberen Rückens zu gewährleisten.

Als Insasse wird eine sogenannte "50 perc Person" angenommen. Das 50. Perzentil ist ein Standartbegriff und repräsentiert die Körpermaße "mittelgroß". Dabei liegen statistisch je 50 % aller Werte über und unter diesem Wert. Ein männlicher "50 perc Fahrer" hat demnach beispielsweise eine Körperhöhe von 175,0 cm und eine Schulterhöhe von 145,0 cm.

In den Figuren sind die Längen L1 und L2 angeführt. Die Länge L1 ist dabei die direkte Länge zwischen der Schnittachse SR und dem oberen Rand 17 des Rückenlehnenelementes 2. Die Länge L2 ist der Abstand zwischen dem oberen Rand 17 des Rückenlehnenelementes 2 und einer Höhe, in welcher sich der Schultergelenkspunkt 16a eines Insassen 16, beziehungsweise einer sogenannten 50 perc Person, befindet. Aus den Figuren 2 und 5 ist deutlich zu erkennen, dass der erfindungsgemäße Fahrzeugsitz 1 bei einem Neigungswinkel von $\alpha$=45° eine wesentlich größere Länge L1 und eine wesentlich kleinere Länge L2 aufweist.

Die Drehachse RD ist ebenso entlang einer Höhenachse (Z) von der Schnittachse (SR) beabstandet. Eine Vergrößerung des Abstandes der Drehachse RD zu der Schnittachse (SR) entlang der Höhenachse Z kann ebenso einen Vorteil hinsichtlich des Komforts bedeuten. Ein diagonaler Abstand D zwischen der Drehachse RD und der Schnittachse SR lässt sich aus dem horizontalen Abstand A und dem Höhenabstand H bestimmen: $D = \sqrt{A^2 + H^2}$.

In den Figuren 6a bis 6d sind beispielhafte Fahrzeugsitze 1 mit einer nach hinten verlagerten Drehachse RD für verschiedenen Neigungswinkel $\alpha$ dargestellt. Die entsprechenden Werte für die Längen L1 und L2 sind in den Figuren angegeben. Selbstverständlich ist die vorliegende Erfindung nicht auf diese speziellen Werte reduziert zu betrachten. In den Figuren 6e bis 6h sind Fahrzeugsitze 1a gezeigt, bei welchen der Abstand A kleiner als der erfindungsgemäße Mindestabstand A = 60 mm ist. Auch hier sind die entsprechenden Werte für die Längen L1 und L2 eingetragen. In der folgenden Tabelle sind die Werte der Längen L1 und L2 für Fahrzeugsitze 1 mit nach hinten verlagerter Drehachse RD und die Werte der Vergleichsfahrzeugsitze dargestellt:

| $\alpha$ [°] | Fahrzeugsitz 1 | | Vergleich Fahrzeugsitz 1a | |
|---|---|---|---|---|
| | L1 [mm] | L2 [mm] | L1 [mm] | L2 [mm] |
| 10 | 499 | 139 | 501 | 139 |
| 22 | 522 | 99 | 508 | 115 |
| 34 | 551 | 55 | 518 | 89 |
| 45 | 588 | 4 | 534 | 61 |

Bei einem Neigungswinkel $\alpha$= 45 ist demnach eine deutlich größere Länge L1 von 588 mm im Vergleich zu 534 mm zu erkennen. Demnach steht eine deutlich längere erste Anlagefläche für den Insassen zur Verfügung. Ferner ist die Länge L2= 4mm im Gegensatz zu L2 = 61mm deutlich geringer. Der Insasse 16 hat demnach eine deutlich bessere Abstützung im Bereich des Schultergelenkspunktes 16a.

Die vorliegende Erfindung ist selbstverständlich nicht auf Fahrzeugsitze zu reduzieren, welche derart kurze Rückenlehnenelemente 2 aufweisen. Eine derartige Verlagerung der ersten Anlagefläche 3, beziehungsweise eine derartige Verlängerung der ersten Anlagefläche 3, kann auch den Komfort bei Fahrzeugsitzen mit höheren Rückenlehnen vergrößern.

Das Rückenlehnenelement 2 ist an einer Haltevorrichtung 11 schwenkbar angeordnet. Die Haltevorrichtung weist zwei Schenkel auf, welche seitlich an dem Fahrzeugsitz 1, beziehungsweise dem Sitzelement 5, angeordnet sind. Die Schenkel sind an dem Sitzunterbau 8 befestigt. Es kann dabei eine physische Drehachse RD vorgesehen sein, welche entlang der Breite des Fahrzeugsitzes durchgehend ist und in/an den beiden Schenkeln gelagert ist. Das Rückenlehnenelement 2 kann jedoch auch mit kurzen Drehachsen, beziehungsweise Bolzen, an den seitlich angeordneten Schenkeln drehbar gelagert sein Diese Drehachsen, beziehungsweise Bolzen, liegen dann entsprechend auf der fiktiven Drehachse RD.

Die Haltevorrichtung 11 kann eine Arretierungseinrichtung umfassen, welche eine Neigung des Rückenlehnenelementes 2 arretiert. Ferner kann eine Rückstelleinrichtung vorgesehen sein, welche das Rückenlehnenelement 2 in eine vorgebbare Ausgangsposition zurückverlagert. Weiterhin kann eine Bedieneinrichtung vorgesehen sein, mittels welcher die Arretierungseinrichtung bedienbar ist und mittels welcher eine Neigung des Rückenlehnenelementes 2 einstellbar ist.

Das Rückenlehnenelement 2 kann weiterhin eine Längenmodifikationseinrichtung umfassen, welche dazu geeignet und dafür vorgesehen ist, bei einer Schwenkung des Rückenlehnenelementes 2 um die Drehachse RD eine Ausdehnung einer Länge des Rückenlehnenelementes 2 zu bewirken. Dabei kann ein Stellelement vorgesehen sein, welches den oberen Rand 17 des Rückenlehnenelementes 2 entsprechend nach oben Verlagern kann. Demnach könnte durch die Längenmodifikationseinrichtung die Länge L1 weiter vergrößert werden und die Länge L2 weiter verkleinert werden.

**Bezugszeichenliste**

| | |
|---|---|
| 1 | Fahrzeugsitz |
| 1a | Fahrzeugsitz (Vergleich) |
| 2 | Rückenlehnenelement |
| 3 | erste Anlagefläche |
| 4 | erste fiktiven Ebene |
| 5 | Sitzelement |
| 6 | zweite Anlagefläche |
| 7 | zweite fiktive Ebene |
| 8 | Sitzunterbau |
| 9 | plattenartiges Element |
| 10 | Polsterelement |
| 11 | Haltevorrichtung |
| 12 | Rahmen oder ein Schalenelement |
| 13 | Polsterelement |
| 14 | Fahrzeugkarosserie |
| 15 | Feder- und oder Dämpfungseinrichtung |
| 16 | Insasse |
| 16a | Schultergelenkspunkt des Insassen |
| 17 | oberer Rand des Rückenlehnenelements |
| A | Abstand |
| SR | Schnittachse der ersten fiktiven Ebene der zweiten fiktiven Ebene |
| RD | Drehachse |
| M | Mittelachse |
| Z | Höhenachse |
| X | Längsachse |
| Y | Breitenachse |
| $\alpha$ | Neigungswinkel |

**Patentansprüche**

1. Fahrzeugsitz (1) umfassend ein Rückenlehnenelement (2) mit einer ersten Anlagefläche (3), welche innerhalb einer ersten fiktiven Ebene (4) angeordnet ist und ein Sitzelement (5) mit einer zweiten Anlagefläche (6), welche innerhalb einer zweiten fiktiven Ebene (7) angeordnet ist, die durch eine Längsachse (X) und eine Breitenachse (Y) des Fahrzeugsitzes (1) aufgespannt wird, wobei die erste fiktive Ebene (4) und die zweite fiktive Ebene (7) sich in einer Schnittachse (SR) schneiden, wobei das Rückenlehnenelement (2) relativ zu dem Sitzelement (5) um eine Drehachse (RD) schwenkbar ist, wobei sich ein Neigungswinkel ($\alpha$) des Rückenlehnenelementes (2) zwischen der ersten fiktiven Ebene (4) und einer Mittelachse (M), welche senkrecht zu der zweiten fiktiven Ebene (7) verläuft, erstreckt, **dadurch gekennzeichnet, dass** in einer ersten Position des Rückenlehnenelementes ein Abstand (A) entlang der Längsachse (X) zwischen der Drehachse (RD) und der Schnittachse (SR) zumindest 60 mm ist, wobei in der ersten Position des Rückenlehnenelementes der Neigungswinkel ($\alpha$) im Wesentlichen 10° beträgt, wobei bei einer Schwenkung des Rückenlehnenelements (2) um die Drehachse (RD) das Sitzelement (5) innerhalb der zweiten fiktiven Ebene (7) bleibt und die Schnittachse (SR) entlang der Längsachse (X) verlagert und sich somit der Abstand (A) verändert.

2. Fahrzeugsitz (1) nach Anspruch 1, **dadurch gekennzeichne**t, dass. der Abstand (A) zumindest 65 mm ist, wobei der Abstand (A) zumindest 70 mm ist, wobei der Abstand (A) zumindest 80 mm ist, wobei der Abstand (A) zumindest 90 mm ist, wobei der Abstand (A) maximal 200 mm ist.

**3.** Fahrzeugsitz (1) nach Anspruch 1 oder 2,
**dadurch gekennzeichnet, dass**
der Fahrzeugsitz (1) einen Sitzunterbau (8) umfasst, wobei der Sitzunterbau (8) eine Feder- und oder Dämpfungseinrichtung für vertikale und/oder horizontale Schwingungen umfasst.

**4.** Fahrzeugsitz (1) nach Anspruch 3,
**dadurch gekennzeichnet, dass**
das Sitzelement (5) an einem Sitzunterbau (8) verlagerbar angeordnet ist, wobei bei einer Verschwenkung des Rückenlehnenelementes (2) um den Neigungswinkel ($\alpha$) das Sitzelement (5) entlang der Längsrichtung (X) verlagert ist, wobei das Sitzelement (5) ein plattenartiges Element (9) umfasst, welches an dem Sitzunterbau (8) verlagerbar angeordnet ist, wobei ein Polsterelement (10) auf dem plattenartigen Element (9) angeordnet ist.

**5.** Fahrzeugsitz (1) nach einem der vorhergehenden Ansprüche,
**dadurch gekennzeichnet, dass**
die Drehachse (RD) entlang einer Höhenachse (Z) von der Schnittachse (SR) beabstandet ist.

**6.** Fahrzeugsitz (1) nach einem der vorhergehenden Ansprüche,
**dadurch gekennzeichnet, dass**
der Fahrzeugsitz (1) eine Haltevorrichtung (11) aufweist, an welcher das Rückenlehnenelement (2) schwenkbar angeordnet ist, wobei die Haltevorrichtung (11) mit dem Sitzunterbau (8) verbunden ist.

**7.** Fahrzeugsitz (1) nach Anspruch 6,
**dadurch gekennzeichnet, dass**
die Haltevorrichtung (11) eine Arretierungseinrichtung umfasst, welche eine Neigung des Rückenlehnenelementes (2) arretiert, wobei eine Bedieneinrichtung vorgesehen ist, mittels welcher die Arretierungseinrichtung bedienbar ist und mittels welcher eine Neigung des Rückenlehnenelementes (2) einstellbar ist.

**8.** Fahrzeugsitz (1) nach einem der vorhergehenden Ansprüche
**dadurch gekennzeichnet, dass**
das Rückenlehnenelement (2) einen Rahmen oder ein Schalenelement (12) aufweist, wobei die Drehachse (RD) entlang der Längsrichtung (X) sich hinter dem Rahmen oder dem Schalenelement (12) erstreckt, wobei das Rückenlehnenelement (2) ein Polsterelement (13) umfasst, welches auf dem Rahmen oder dem Schalenelement (12) angeordnet ist.

**9.** Fahrzeugsitz (1) nach einem der vorhergehenden Ansprüche,
**dadurch gekennzeichnet, dass**
das Rückenlehnenelement (2) und das Sitzelement (5) mechanisch gekoppelt sind, wobei diese mechanische Kopplung dazu geeignet und dafür vorgesehen ist, bei einer Schwenkbewegung des Rückenlehnenelementes (2) um die Drehachse (RD) eine Translationsbewegung des Sitzelementes (5) entlang der Längsachse (X) zu verursachen, wobei ein elastischer Brückenabschnitt zumindest abschnittsweise zwischen dem Rückenlehnenelement (2) und dem Sitzelement (5) vorgesehen ist.

**10.** Fahrzeugsitz (1) nach einem der vorhergehenden Ansprüche,
**dadurch gekennzeichnet, dass**
das Rückenlehnenelement (2) eine Längenmodifikationseinrichtung umfasst, welche dazu geeignet und dafür vorgesehen ist, bei einer Schwenkung des Rückenlehnenelementes (2) um die Drehachse (RD) eine Ausdehnung einer Länge des Rückenlehnenelementes (2) zu bewirken.

**Claims**

**1.** Vehicle seat (1) comprising a backrest element (2) having a first contact surface (3) which is arranged within a first imaginary plane (4), and a seat element (5) having a second contact surface (6) which is arranged within a second imaginary plane (7) which is defined by a longitudinal axis (X) and a width axis (Y) of the vehicle seat (1), wherein the first imaginary plane (4) and the second imaginary plane (7) intersect in an intersecting axis (SR), wherein the backrest element (2) is pivotable relative to the seat element (5) about a rotational axis (RD), wherein an inclination angle ($\alpha$) of the backrest element (2) extends between the first imaginary plane (4) and a central axis (M) which runs perpendicularly to the second imaginary plane (7),

**characterised in that**,
in a first position of the backrest element, a distance (A) along the longitudinal axis (X) between the rotational axis (RD) and the intersecting axis (SR) is at least 60 mm, wherein, in the first position of the backrest element, the inclination angle ($\alpha$) is substantially 10°, wherein, when the backrest element (2) is pivoted about the rotational axis (RD), the seat element (5) remains within the second imaginary plane (7) and the intersecting axis (SR) is displaced along the longitudinal axis (X) and thus the distance (A) changes.

2. Vehicle seat (1) according to claim 1,
**characterised in that**
the distance (A) is at least 65 mm, wherein the distance (A) is at least 70 mm, wherein the distance (A) is at least 80 mm, wherein the distance (A) is at least 90 mm, wherein the distance (A) is maximally 200 mm.

3. Vehicle seat (1) according to claim 1 or 2,
**characterised in that**
the vehicle seat (1) comprises a seat substructure (8), wherein the seat substructure (8) comprises a suspension and/or damping device for vertical and/or horizontal vibrations.

4. Vehicle seat (1) according to claim 3,
**characterised in that**
the seat element (5) is displaceably arranged on the seat substructure (8), wherein the seat element (5) is displaced along the longitudinal direction (X) when the backrest element (2) is pivoted by the inclination angle ($\alpha$), wherein the seat element (5) comprises a plate-like element (9) which is displaceably arranged on the seat substructure (8), wherein a cushion element (10) is arranged on the plate-like element (9).

5. Vehicle seat (1) according to one of the preceding claims,
**characterised in that**
the rotational axis (RD) is spaced apart from the intersecting axis (SR) along a height axis (Z).

6. Vehicle seat (1) according to one of the preceding claims,
**characterised in that**
the vehicle seat (1) has a retaining device (11), on which the backrest element (2) is pivotably arranged, wherein the retaining device (11) is connected to the seat substructure (8).

7. Vehicle seat (1) according to claim 6,
**characterised in that**
the retaining device (11) comprises a locking device which locks an inclination of the backrest element (2), wherein an operating device is provided, by means of which the locking device can be operated and by means of which an inclination of the backrest element (2) can be adjusted.

8. Vehicle seat (1) according to one of the preceding claims,
**characterised in that**
the backrest element (2) has a frame or a shell element (12), wherein the rotational axis (RD) extends along the longitudinal direction (X) behind the frame or the shell element (12), wherein the backrest element (2) comprises a cushion element (13) which is arranged on the frame or the shell element (12).

9. Vehicle seat (1) according to one of the preceding claims,
**characterised in that**
the backrest element (2) and the seat element (5) are mechanically coupled, wherein said mechanical coupling is suitable and provided for causing a translational movement of the seat element (5) along the longitudinal axis (X) when the backrest element (2) is pivoted about the rotational axis (RD), wherein an elastic bridge portion is provided at least in sections between the backrest element (2) and the seat element (5).

10. Vehicle seat (1) according to one of the preceding claims,
**characterised in that**
the backrest element (2) comprises a length modification device which is suitable and provided for effecting an expansion of a length of the backrest element (2) when the backrest element (2) is pivoted about the rotational axis (RD).

**Revendications**

1. Siège de véhicule (1) comportant un élément dossier (2) avec une première surface d'appui (3), laquelle est disposée à l'intérieur d'un premier plan fictif (4), et un élément siège (5) avec une seconde surface d'appui (6), laquelle est disposée à l'intérieur d'un second plan fictif (7), qui est défini par un axe longitudinal (X) et un axe de largeur (Y) du siège de véhicule (1), le premier plan fictif (4) et le second plan fictif (7) se coupant en un axe de coupe (SR), l'élément dossier (2) étant apte à pivoter par rapport à l'élément siège (5) autour d'un axe de rotation (RD), un angle d'inclinaison ($\alpha$) de l'élément dossier (2) s'étendant entre le premier plan fictif (4) et un axe central (M), lequel s'étend perpendiculairement au second plan fictif (7),
**caractérisé par le fait que**
dans une première position de l'élément dossier, une distance (A) le long de l'axe longitudinal (X) entre l'axe de rotation (RD) et l'axe de coupe (SR) est d'au moins 60 mm, où, dans la première position de l'élément dossier, l'angle d'inclinaison ($\alpha$) s'élève sensiblement à 10°, où, lors d'un pivotement de l'élément dossier (2) autour de l'axe de rotation (RD), l'élément siège (5) reste à l'intérieur du second plan fictif (7) et l'axe de coupe (SR) se déplace le long de l'axe longitudinal (X) et la distance (A) est ainsi modifiée.

2. Siège de véhicule (1) selon la revendication 1,
**caractérisé par le fait que**
la distance (A) est d'au moins 65 mm, la distance (A) est d'au moins 70 mm, la distance (A) est d'au moins 80 mm, la distance (A) est d'au moins 90 mm, la distance (A) est d'au plus 200 mm.

3. Siège de véhicule (1) selon l'une des revendications 1 ou 2,
**caractérisé par le fait que**
le siège de véhicule (1) comprend une infrastructure de siège (8), l'infrastructure de siège (8) comportant un dispositif de ressort et/ou d'amortissement des vibrations verticales et/ou horizontales.

4. Siège de véhicule (1) selon la revendication 3,
**caractérisé par le fait que**
l'élément siège (5) est disposé de manière déplaçable sur une infrastructure de siège (8), l'élément siège (5) se déplaçant le long de la direction longitudinale (X) lorsque l'élément dossier (2) est pivoté de l'angle d'inclinaison ($\alpha$), l'élément siège (5) comportant un élément en forme de plaque (9), lequel est disposé de manière déplaçable sur l'infrastructure de siège (8), un élément de rembourrage (10) étant disposé sur l'élément en forme de plaque (9).

5. Siège de véhicule (1) selon l'une des revendications précédentes,
**caractérisé par le fait que**
l'axe de rotation (RD) est espacé de l'axe de coupe (SR) le long d'un axe de hauteur (Z).

6. Siège de véhicule (1) selon l'une des revendications précédentes,
**caractérisé par le fait que**
le siège de véhicule (1) présente un dispositif de maintien (11) sur lequel l'élément dossier (2) est disposé de manière pivotante, le dispositif de maintien (11) étant relié à l'infrastructure de siège (8).

7. Siège de véhicule (1) selon la revendication 6,
**caractérisé par le fait que**
le dispositif de maintien (11) comporte un dispositif de blocage, lequel bloque une inclinaison de l'élément dossier (2), un dispositif de commande étant prévu au moyen duquel le dispositif de blocage est actionnable et au moyen duquel une inclinaison de l'élément dossier (2) est ajustable.

8. Siège de véhicule (1) selon l'une des revendications précédentes
**caractérisé par le fait que**
l'élément dossier (2) présente un cadre ou un élément coque (12), l'axe de rotation (RD) s'étendant le long de la direction longitudinale (X) derrière le cadre ou l'élément coque (12), l'élément dossier (2) comprenant un élément de rembourrage (13), lequel est disposé sur le cadre ou l'élément coque (12).

9. Siège de véhicule (1) selon l'une des revendications précédentes,
**caractérisé par le fait que**
l'élément dossier (2) et l'élément siège (5) sont couplés mécaniquement, ce couplage mécanique étant adapté et prévu pour provoquer un mouvement de translation de l'élément siège (5) le long de l'axe longitudinal (X) lorsque l'élément dossier (2) pivote autour de l'axe de rotation (RD), une section de pont élastique étant prévue au moins par sections entre l'élément dossier (2) et l'élément siège (5).

10. Siège de véhicule (1) selon l'une des revendications précédentes,
**caractérisé par le fait que**
l'élément dossier (2) comporte un dispositif de modification de longueur, lequel est adapté et prévu pour provoquer une extension de la longueur de l'élément dossier (2) lorsque l'élément dossier (2) pivote autour de l'axe de rotation (RD).

Fig. 1

Fig. 2

## Fig. 3

Z

Y

X

13

3

4

12

2

10

6

7

SR

9

5

## Fig. 4

1a

α

M

16

16a

17

2,3,4

L2

L1

SIP

5,6,7

11

RD

SR

A

Z

X

14

15

8

Fig. 5

Fig. 6a

Fig. 6b

Fig. 6c

Fig. 6d

Fig. 6e

Fig. 6f

Fig. 6g

Fig. 6h

**EP 3 838 661 B1**

**IN DER BESCHREIBUNG AUFGEFÜHRTE DOKUMENTE**

**In der Beschreibung aufgeführte Patentdokumente**

- EP 3428005 A